(19) Europäisches Patentamt

European Patent Office

Office européen des brevets

(11) **EP 1 401 125 A2**

(12) **EUROPEAN PATENT APPLICATION**

(43) Date of publication:
**24.03.2004 Bulletin 2004/13**

(51) Int Cl.⁷: **H04B 10/10**

(21) Application number: **03255891.8**

(22) Date of filing: **19.09.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **20.09.2002 JP 2002275340**

(71) Applicant: **Victor Company of Japan, Ltd.
Yokohama 221-0022 (JP)**

(72) Inventors:
• **Naruki, Hidetoshi
Kanagawa-ken 228-0821 (JP)**

• **Okuaki, Katsuo
Kanagawa-ken 228-0023 (JP)**
• **Sasao, Takayoshi
Yokohama 236-0046 (JP)**
• **Yamada, Kiriko
Yokohama 236-0042 (JP)**

(74) Representative: **Senior, Alan Murray
J.A. KEMP & CO.,
14 South Square,
Gray's Inn
London WC1R 5JJ (GB)**

(54) **Optical wireless communication system**

(57)     A transmitter (1) transmits an optical signal to a receiver (22) for optical wireless communications. The receiver returns to the transmitter a pilot light representing light-receiving level information of the received optical signal. The transmitter (1) has a set of 2×2 light-receiving elements (PD1, PD2, PD3, PD4) for receiving the pilot light returned from the receiver, and executes a rough optical axis adjustment based on the difference among the light-receiving levels detected by respective light-receiving elements. Then, the transmitter (1) executes a fine optical axis adjustment based on the light-receiving level information contained in the pilot light.

*FIG. 3*

## Description

This invention relates to an optical wireless communication system capable of easily equalizing an optical axis of a transmitter toward a receiver in optical wireless communications.

An optical wireless transmission technique is conventionally known as a technique for executing spatial transmission of information by means of light. In general, infrared ray is preferably used for the optical wireless communications. The light-emitting elements preferably used for this optical wireless transmission technique are semiconductor type light-emitting elements, such as light-emitting diodes and laser diodes. In the optical wireless transmission, to assure a satisfactory transmitting/receiving distance, it is necessary to acutely condense the directivity of a light beam generated from a transmitting apparatus so that a sufficient level of light can be received by a receiving apparatus. To this end, it is inevitably required to adjust and equalize the optical axis of the transmitting apparatus with the optical axis of the receiving apparatus. However, using a light beam having narrow directivity or using an invisible light beam such as infrared ray makes it complicated and time-consuming to execute the adjustment of optical axes for the optical wireless communication system. Accordingly, there are conventionally proposed optical wireless communication systems capable of facilitating the optical axis adjustment.

As an example, the Japanese Patent Application Laid-open No. 62-110339(1987) discloses an optical wireless communication system, according to which a transmitting apparatus transmits a visible ray together with a signal transmitting infrared ray by condensing the visible ray into a pin-point level so as to have an optical axis identical or parallel to that of the signal transmitting infrared ray. The transmitted visible ray is reflected by a visible ray reflection device provided in a receiving apparatus. The visible ray reflected by this reflection device is observed by an operator so that the operator can execute the optical axis adjustment of the transmitting apparatus.

Furthermore, as another conventional technique, there is an optical wireless communication system which includes an aiming device installed in a transmitting apparatus to allow an operator to execute optical axis adjustment while watching the aiming device. Furthermore, there is another optical wireless communication system connectible with a light-receiving level measuring device to allow a couple of operators to execute the optical axis adjustment. Furthermore, as shown in the Japanese Patent Application Laid-open No. 7-131422(1995), it is possible to use an optical axis adjusting light source provided at a light-receiving apparatus to return information of a receiving level of a transmitted light from a transmitter and adjust the optical axis in accordance with it.

However, according to the optical wireless communication system disclosed in the above-described Japanese Patent Application Laid-open No. 62-110339(1987), a special equipment needs to be installed in the transmitting apparatus for generating a visible ray being not used for the purpose of optical wireless transmission. In the case a long distance needs to be kept between the transmitting apparatus and the receiving apparatus, the light-emission output of this visible ray must be increased sufficiently. It is necessary to provide an additional arrangement for intended increase of the output. The costs for the transmitting apparatus will increased. The size of the apparatus will be enlarged. Installing the aiming device in the transmitting apparatus will encounter with the same drawbacks. Furthermore, strictly adjusting and equalizing the optical axis of a visible ray or the line of aiming with the optical axis of a signal transmitting infrared ray will result in increase of costs. In the case the light-receiving level measuring device is connected to the receiving apparatus to perform the adjustment by a couple of operators, preparing and adjusting the light-receiving level measuring device beforehand is troublesome and requires man powers. As described above, when required to simplify the optical axis adjustment, the conventional optical wireless communication systems encounter with increase of costs for the transmitting and receiving apparatuses or enlargement of their sizes. On the other hand, the intent to realize the cost reduction and downsizing for the transmitting and receiving apparatuses tends to be time-consuming for accomplishing the optical axis adjusting work.

The above-described Japanese Patent Application Laid-open No. 7-131422( 1995) intends to solve the above-described problems. To this end, a single light-receiving element is installed on the transmitter to receive a light transmitted from a light-emitting element installed in the receiver for optical axis adjustment. The optical axis adjustment is executed based on the light-receiving level of this single light-receiving element and also based on the receiving level at the receiver which receives a signal light transmitted from the transmitter. Thus, in the case an operator executes the optical axis adjustment by using a level indicating apparatus with reference to the thus obtained information, the adjustment work will be simplified. However, many unnecessary operations will be required for accomplishing an automatic optical axis adjustment.

The reasons are as follows. It is impossible to identify the position of the receiver in the up-and-down direction as well as in the right-and-left direction based on the level of only one optical axis adjusting transmission light obtained by the single light-receiving element. Accordingly, to execute the automatic optical axis adjustment, it is necessary to move the adjusting apparatus at random to judge whether the direction of its movement is correct or not by comparing a detected light-receiving level with a previously measured level. In this respect, no effective judgment is feasible before the adjusting apparatus is driven. Accordingly, unnecessary movements of the adjusting apparatus are unavoidable. Considering the time required for mechanical drive, this is a negative factor for speedily realizing an automatic optical axis adjustment. Furthermore, during the automatic optical axis adjustment, the transmitter will transmit the transmission light in unspecified directions and accordingly will give adverse influence to peripheral optical systems. In the case a laser is used as a light source, significant influence will be given to persons staying in the vicinity of the light source.

In view of the above-described problems, the present invention has an object to provide an optical wireless communication system capable of eliminating unnecessary movements for optical axis adjustment in each of the transmitter and the receiver, thereby realizing a simple optical axis adjustment.

Furthermore, the present invention has an object to provide an optical wireless communication system capable of preventing the transmission light from being unnecessarily emitted until the transmitter can capture the receiver during the optical axis adjustment.

In order to accomplish the above and other related objects, the present invention provides an optical wireless communication system including a transmitter having a first optical transmitting means for transmitting a first optical signal having narrow directivity and a receiver having a first optical receiving means for receiving the first optical signal and converting the first optical signal into an electric signal. The receiver of this invention includes a light-receiving level detecting means for detecting a light-receiving level of the first optical signal received by the first optical receiving means. Furthermore, the receiver includes a second optical transmitting means for transmitting a second optical signal which carries light-receiving level information of the first optical signal and has directivity wider than that of the first optical signal. The transmitter of this invention includes a second optical receiving means consisting of a plurality of light-receiving elements each having light-receiving capability for receiving the second optical signal at a level corresponding to the direction of the receiver. Furthermore, the transmitter includes a drive means for positioning the first optical transmitting means and the second optical receiving means by integrally shifting them toward the direction of the receiver. The transmitter includes a rough optical axis adjusting means for executing a rough optical axis adjustment by controlling the drive means so as to eliminate a difference in the light-receiving level of respective light-receiving elements of the second optical receiving means. Furthermore, the transmitter includes a fine optical axis adjusting means for executing a fine optical axis adjustment by controlling the drive means based on the light-receiving level information contained in the second optical signal being received by the second optical receiving means, after the rough optical axis adjustment by the rough optical axis adjusting means is accomplished.

Preferably, the second optical receiving means is composed of four photoelectric conversion elements arranged in a matrix pattern consisting of two lines and two rows in horizontal and vertical directions. The rough optical axis adjusting means executes the rough positioning of the optical axis in a total of eight directions based on the difference in the light-receiving level of the four photoelectric conversion elements.

Preferably, the fine optical axis adjusting means searches a region wherein the light-receiving level information exceeds a predetermined value and executes the fine optical axis adjustment chiefly for the region identified by the search.

Preferably, the fine optical axis adjusting means searches a relatively wide region when the light-receiving level information is relatively small, and the fine optical axis adjusting means searches a relatively narrow region when the light-receiving level information is relatively large.

Preferably, the fine optical axis adjusting means estimates a distance to the receiver based on the light-receiving level information, and accomplishes the fine optical axis adjustment.

Preferably, transmitting the first optical signal by the first optical transmitting means is stopped until the light-receiving level of the plurality of light-receiving elements of the second optical receiving means exceeds a predetermined value.

The above and other objects, features and advantages of the present invention will become more apparent from the following detailed description which is to be read in conjunction with the accompanying drawings, in which:

Fig. 1 is a schematic diagram showing the arrangement of an optical wireless communication system in accordance with a preferred embodiment of the present invention; .

Fig. 2 is a flowchart showing an example of an optical axis adjustment executed by optical wireless communication system in accordance with the preferred embodiment of the present invention;

Fig. 3 is a view explaining a rough optical axis adjustment executed by the optical wireless communication system in accordance with the preferred embodiment of the present invention; and

Fig. 4 is a view explaining drive directions in the rough optical axis adjustment in relation to the light-receiving signal levels in accordance with the present invention.

A preferred embodiment of the present invention will be explained hereinafter with reference to attached drawings.

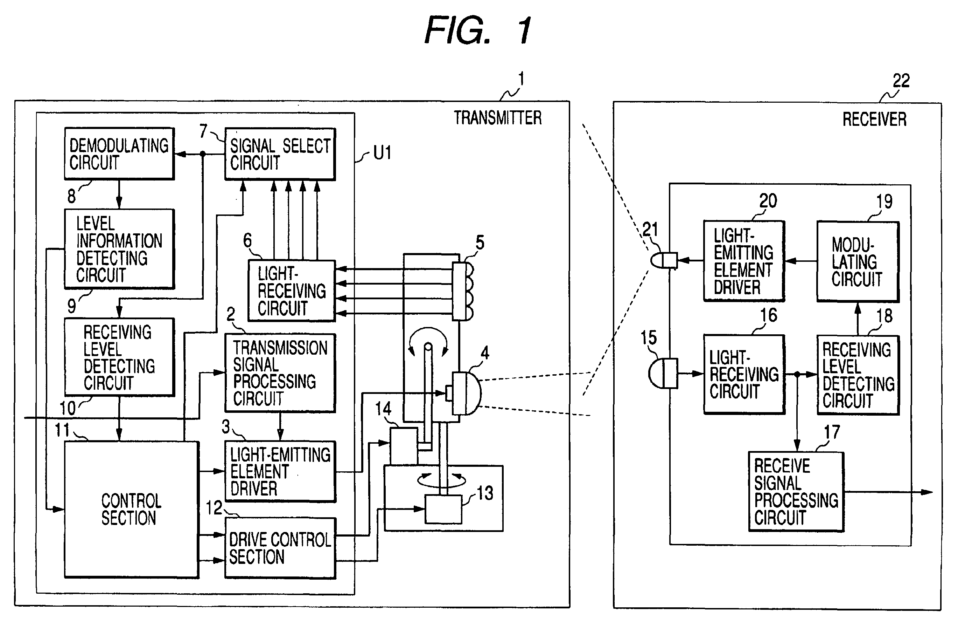

Fig. 1 is a diagram showing a schematic arrangement of an optical wireless communication system in accordance with the preferred embodiment of this invention which realizes an optical axis adjustment of this invention. Fig. 1 shows the arrangement of a transmitter 1 and a receiver 22 cooperatively constituting the optical wireless communication system of this invention.

<Arrangement of Receiver 22>

First, the receiver 22 of this optical wireless communication system will be explained. The receiver 22 includes a first optical receiving device 15 having a relatively wide directive angle for light-receiving a first optical signal which is transmitted by spatial transmission from a first optical transmitting device 4 provided in the transmitter 1. The first optical receiving device 15 is, for example, constituted by a PD or an APD and a condensing lens. The received first optical signal is electrically amplified and processed appropriately by a light-receiving circuit 16. And, then, the processed first optical signal is converted by a receive signal processing circuit 17 into a signal to be transmitted to an external device (such as an image-receiving apparatus) although not shown in the drawings. The converted signal is transmitted to the external device.

Furthermore, the receiver 22 includes a second optical transmitting device 21 having relatively wide directivity for allowing the transmitter 1 to perform optical axis adjustment relative to the receiver 22. The second optical transmitting device 21 is, for example, constituted by an LED alone or by a combination of the LED and a lens. The second optical transmitting device 21 transmits a second optical signal (which is generally referred to as a pilot light) to the transmitter 1. A receiving level detecting circuit 18 detects the level of the first optical signal received by the first optical receiving device 15. A modulating circuit 19 modulates the detected level of the received first optical signal and sends it to a light-emitting element driver 20. Thus, by using the second optical signal, the receiver 22 returns the received condition of the first optical signal transmitted from the transmitter 1.

<Arrangement of Transmitter 1>

Next, the transmitter 1 of this optical wireless communication system will be explained. The transmitter 1 includes a transmission signal processing circuit 2 which receives a signal (e.g., a video signal) sent from an external data generating device (not shown). The transmission signal processing circuit 2 converts the received signal into a signal format to be transmitted from the transmitter 1 and sends the converted signal to a light-emitting element driver 3. The first optical transmitting device 4 transmits it as a transmission light (i.e., first optical signal) having narrow directivity to the receiver 22 by spatial transmission. The first optical transmitting device 4 is, for example, constituted by an LED or an LD and a condensing lens.

Furthermore, the transmitter 1 includes a second optical receiving device 5 which is for example composed of a plurality of light-receiving elements (e.g., PDs). The second optical receiving device 5 receives the second optical signal transmitted from the second optical transmitting device 21 installed in the receiver 22 for optical axis adjustment. The signal received by each light-receiving element of the second optical receiving device 5 is electrically amplified or processed appropriately in a light-receiving circuit 6. The receive signal of each light-receiving element being processed in the light-receiving circuit 6 is then sent to a signal select circuit 7. The signal select circuit 7 selects a particular receive signal only in accordance with a command from a control section 11. A receiving level detecting circuit 10 detects the level of the selected receive signal, and forwards the detection result to the control section 11. Furthermore, the receive signal selected by the signal select circuit 7 in accordance with the command from the control section 11 is demodulated by a demodulating circuit 8. A level information detecting circuit 9 detects light-receiving level information at the first optical receiving device 15 in the receiver 22, and forwards the detected result to the control section 11.

<Optical Axis Adjustment>

The control section (e.g., MUP, DSP, or the like) 11, to direct the optical axis of the transmitter 1 toward the receiver, uses the signal select circuit 7 to select a necessary receive signal from the signals obtained by the second optical receiving device 5. The control section 11 controls a drive control section 12 based on the information obtained from the receiving level detecting circuit 10 and the level information detecting circuit 9. The drive control section 12 controls a horizontal-directional drive device 13 and a vertical-directional drive device 14 (e.g., stepping motors or the like) to adjust the light-emitting direction of the first optical transmitting device 4 and the light-receiving direction of the second optical receiving device 5, Furthermore, the control section 11 occasionally deactivates the light-emitting element driver 3 based on the information obtained from the receiving level detecting circuit 10 to prevent the first optical signal from being emitted unnecessarily to the surrounding during the optical axis adjustment.

The optical axis adjustment by the above-described optical wireless communication system is performed in the following manner. When the optical transmission is executed indoors, the distance between the transmitter 1 and the receiver 22 is several tens meters or less. First of all, the direction (i.e., optical axis) of the light-receiving element of the first optical receiving device 15 is easily adjustable toward the transmitter 1 with rough estimation relying on operator's eyes because the light-receiving element of the first optical receiving device 15 equipped in the receiver 22 has relatively wide directivity. The transmitter 1 outputs the first optical signal which is converted from a video signal or the like.

The receiver 22 receives the first optical signal and converts it into an electric signal to output the converted signal as a video signal or other data to the outside via the receive signal processing circuit 17. Meanwhile, the receiver 22 detects the receiving level of the first optical signal.

The pilot light carrying the information of the detected level of the first optical signal received at the receiver 22 is returned as the second optical signal to the transmitter 1. The transmitter 1 receives this pilot light at its second optical receiving device 5 and converts the received pilot light into an electric signal. From this signal, the light-receiving level of the second signal itself is taken out through the receiving level detecting circuit 10. Furthermore, the light-receiving level information of the first optical signal received at the receiver 22 is also taken out from the second optical signal, because the second optical signal carries the light-receiving level information of the first optical signal received at the receiver 22. The transmitter 1 causes the control section 11 to control the drive devices 13 and 14 based on the information being thus obtained, thereby automatically adjusting the direction (i.e., optical axis) of the transmitter 1 toward the receiver 22.

As described above, the optical wireless communication system of this invention is characterized in that the transmitter 1 automatically adjusts its optical axis toward the receiver 22. To this end, the transmitter 1 includes the signal select circuit 7, the demodulating circuit 8, the level information detecting circuit 9, and the receiving level detecting circuit 10. The control section 11 obtains various data from these sections, and adjusts the optical axis of the transmitter 1 by controlling the drive control section 12 and the light-emitting element driver 3, thereby realizing optical transmission between the transmitter 1 and the receiver 22.

The transmission signal processing circuit 2, the light-emitting element driver 3, the light-receiving circuit 6, the signal select circuit 7, the demodulating circuit 8, the level information detecting circuit 9, the receiving level detecting circuit 10, the control section 11, and the drive control section 12 are integrated as a control unit U1.

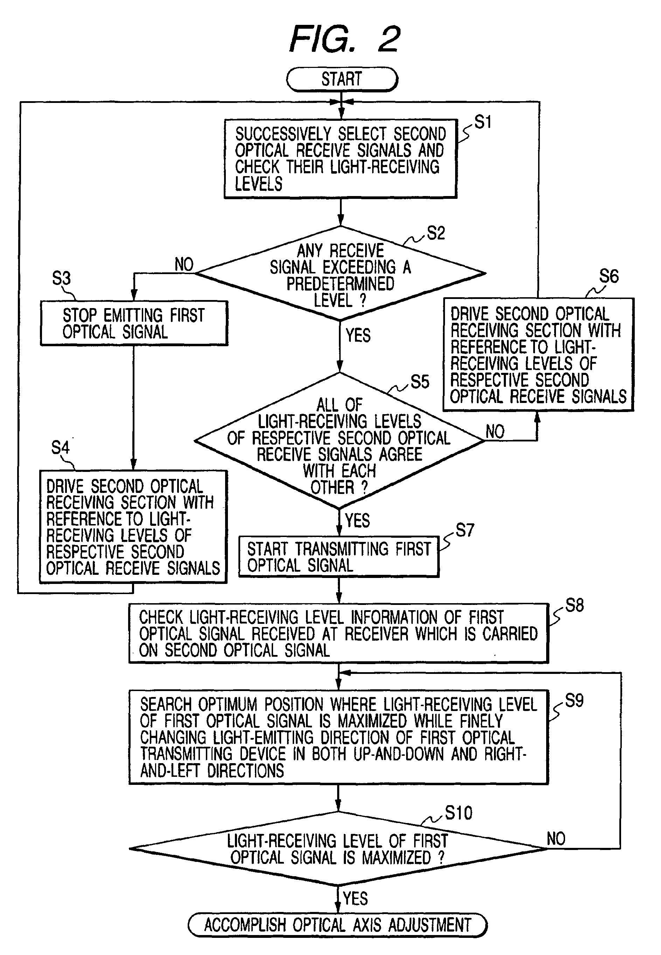

Next, the procedure for establishing an optical communication path between the transmitter 1 and the receiver 22 will be briefly explained with reference to the operation of the control section 11 shown in Fig. 2. First in step S1, the control section 11 controls the signal select circuit 7 to successively select a plurality of second optical receive signals and to check the level of each second optical receive signal by using the receiving level detecting circuit 10.

Next, in step S2, the control section 11 judges whether or not there is any second optical receive signal exceeding a first judgment level among the second optical receive signals being checked in step S1. When there is no second optical receive signal exceeding the first judgment level in this judgment, the control flow proceeds to step S3 in which the control section 11 stops the light-emitting operation of the first optical signal by the first optical transmitting device 4 of the transmitter 1. With this operation, it becomes possible to prevent the optical axis of the first optical transmitting device 4 of the transmitter 1 from being directed to unnecessary directions deviated from the receiver 22. Accordingly, it becomes possible to prevent the transmission light (i.e., the first optical signal) from being emitted carelessly to the surrounding and eliminate adverse influence given to the peripheral devices or to the environment. Meanwhile, the receiver 22 continues to return the pilot light for allowing the transmitter 1 to continuously execute the optical axis adjustment.

The transmitter 1, after having stopped emitting the transmission light (i.e., the first optical signal) in the step S3, in step S4 drives the second optical receiving device 5 in the up-and-down direction as well as in the right-and-left direction with reference to the level of each second optical receive signal, thereby searching the pilot light (i.e., second optical signal) returned from the receiver 22. In this case, considering the fact that there is no second optical receive signal exceeding the first judgment level, it is presumed that the receiver 22 is deviated far from the present optical axis of the first optical transmitting device 4 of the transmitter 1. Thus, the control section 11 sets a relatively wide search area for driving the second optical receiving device 5 in the up-and-down direction as well as in the right-and-left direction, so that the pilot light (i.e., second optical signal) emitted from the receiver 22 can be surely captured by the second optical receiving device 5 in the next or succeeding search operation.

On the other hand, when there is any second optical receive signal exceeding the first judgment level in the step S2, the control section 11 checks in step S5 whether or not respective second optical receive signals agree with each other (or reside within a predetermined range in the case of a practical system) in their receiving levels. If no agreement is found, the control flow proceeds to step S6 in which the control section 11 controls the drive devices 13 and 14 to change the light-emitting direction of the first optical transmitting device 4 and the light-receiving direction of the second optical receiving device 5 of the transmitter 1 in the up-and-down direction as well as in the right-and-left direction with reference to the level of each second optical receive signal, so as to equalize the receiving levels of respective second optical receive signals.

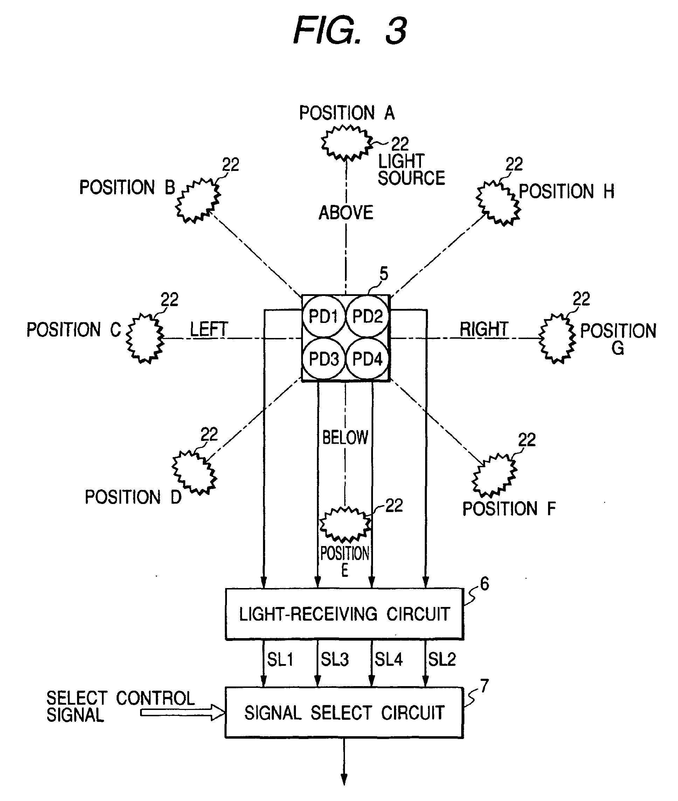

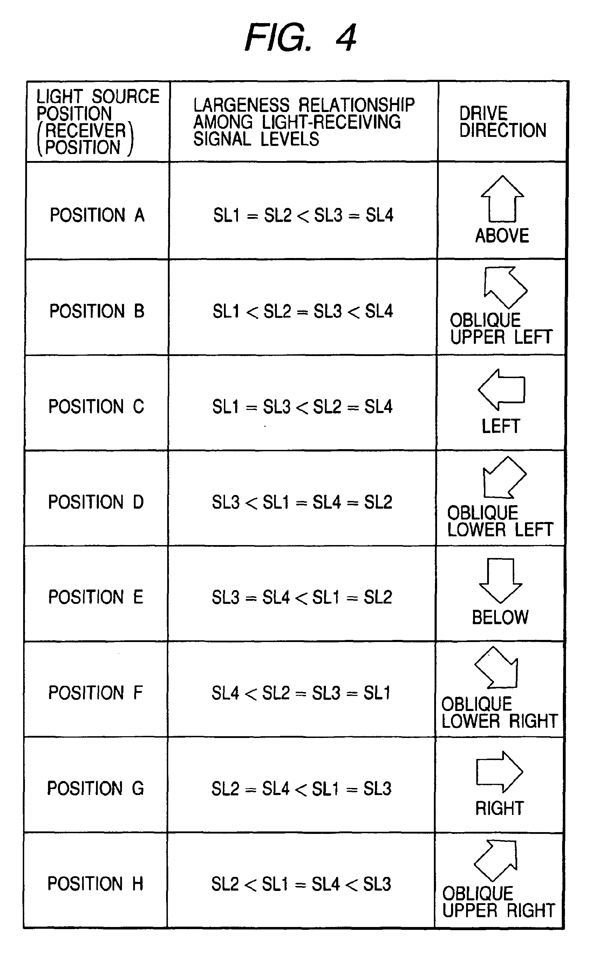

In this case, in determining the shifting direction of the first optical transmitting device 4 and the second optical receiving device 5 for equalizing the receiving levels of respective second optical receive signals, the transmitter 1 basically drives them toward the direction approaching to a higher receiving level in respective light-receiving elements of the second optical receiving device 5. This operation will be explained later with reference to Figs. 3 and 4.

The above-described steps S1-S6 are control contents of a rough optical axis adjustment performed in this optical wireless communication system.

When the agreement in the receiving level of all of the second optical receive signals is founded in the step S5, the control flow proceeds to step S7 in which the control section 11 starts or resumes transmitting the first optical signal by activating the light-emitting element driver 3. Then in step S8, the control section 11 checks the light-receiving level information of the first optical signal received by the receiver 22 which is carried on the second optical signal returned from the receiver 22. Then, in step S9, the control section 11 checks the light-receiving level of the first optical signal received by the receiver 22 while finely and slowly changing the light-emitting direction of the first optical transmitting device 4 in the up-and-down direction as well as in the right-and-left direction.

In this case, the control section 11 sets a search area considering the distance to the receiver 22, for driving the first optical transmitting device 4 in the up-and-down direction as well as in the right-and-left direction, so that the transmission light (i.e., first optical signal) emitted from the transmitter 1 can be effectively captured by the first optical receiving device 15 of the receiver 22 in the next or succeeding search operation.

More specifically, the control section 11 searches a relatively wide region when the light-receiving level information of the first optical signal returned from the receiver 22 is relatively small, and searches a relatively narrow region when the light-receiving level information is relatively large.

Next, according to this embodiment, it is checked in step S10 whether or not the light-receiving level of the first optical signal is maximized. When the light-receiving level of the first optical signal is maximized, it is judged that the optical axis of the transmitter is correctly adjusted toward the optical axis of the receiver. The optical axis adjustment is finished.

The above-described steps S7-S10 are control contents of a fine optical axis adjustment performed in this optical wireless communication system.

Regarding the method for adjusting the optical axis, instead of detecting the maximum light-receiving level of the first optical signal, it is also possible to introduce a method of judging whether or not the light-receiving level exceeds a predetermined (communicable) level.

Alternatively, as another embodiment of this invention, it is possible to search a region exceeding a predetermined level and adjust the optical axis to the center of this searched region. In this respect, the fine optical axis adjustment is performed to limit a search region only to a specific region where the light-receiving level information of the first optical signal received at the receiver 22 exceeds a predetermined value and then the fine optical axis adjustment is executed chiefly for the region identified by the search.

Furthermore, as another embodiment of this invention, it is possible to estimate the distance to the receiver based on the light-receiving level information because the light-receiving level of the first optical signal received at the receiver 22 is in a proportional relationship with the distance to the receiver. In this respect, the fine optical axis adjustment is accomplished by estimating the distance to the receiver based on the light-receiving level information of the first optical signal which is carried on the second optical signal returned from the receiver.

This makes it possible to accomplish the optical axis adjustment at an early time without continuing it endlessly.

Next, the drive operations of the steps S4 and S6 shown in Fig. 2 will be explained in more detail with reference to Figs. 3 and 4. According to the operations in the steps S4 and S6, the transmitter 1 searches the position of the receiver 22 based on the level of respective second optical receive signals obtained from a plurality of light-receiving elements consisting of the second optical receiving device 5. Fig. 3 is a view explaining the operation. The second optical receiving device 5 installed in the transmitter 1 consists of a total of four light-receiving elements PD1, PD2, PD3, and PD4, such as photoelectric conversion elements, arranged in a matrix pattern consisting of two lines and two rows in horizontal and vertical directions, as shown in the drawing. Fig. 3 shows the position of receiver 22 relative to the light-receiving elements PD1, PD2, PD3, and PD4. In the drawing, the position of receiver 22 is shown as a light source.

When the receiver 22 is positioned in the direction of the light source position A shown in Fig. 3, i. e., positioned just above the second optical receiving device 5 when seen from the transmitter 1, the following relationship is obtained as shown in Fig. 4.

$$SL1 = SL2 < SL3 = SL4$$

where SL1 represents a light-receiving signal level of PD I , SL2 represents a light-receiving signal level of PD2, SL3 represents a light-receiving signal level of PD3, and SL4 represents a light-receiving signal level of PD4 of the second optical receiving device 5 of the transmitter 1. The light-receiving signal level is also referred to as receiving level or referred to as light-receiving level.

Considering this relationship, the control section 11 compares respective light-receiving signal levels SL1 to SL4 obtained from the second optical receiving device 5. And, in the case the relationship SL1 = SL2 < SL3 = SL4 is confirmed, the control section 11 identifies the receiver 22 as being positioned in the upper direction. Thus, the control section 11 outputs a control signal via the drive control section 12 to the drive devices 13 and 14 to change or direct upward the light-emitting direction of the first optical transmitting device 4 and the light-receiving direction of the second optical receiving device 5.

In the same manner, in the case that the receiver 22 is positioned at the oblique upper left position B, at the left position C, at the oblique lower left position D, at the below position E, at the oblique lower right position F, at the right position G, or at the oblique right upper position H, the relationship shown in Fig. 4 is established among SL1, SL2, SL3, and SL4. The control section 11 checks this relationship, and controls the first optical transmitting device 4 and the second optical receiving device 5 so that their light-emitting and light-receiving directions are changed toward the direction shown in Fig. 4.

The above adjustment control is repeated several times until the first optical transmitting device 4 and the second optical receiving device 5 are driven to an optimum position where the light-receiving signal levels SL1 to SL4 of the second optical receive signals of the transmitter 1 are equalized to each other. When such an optimum position is found, it is regarded that the transmitter 1 has succeeded in capturing the position of receiver 22. From this condition, the optical axis of the transmitter 1 is further adjusted based on the light-receiving level information of the first optical signal which is carried on the second optical signal, thereby realizing an accurate and speedy automatic optical axis adjustment.

The arrangement of the transmitter 1 or the receiver 22 each constituting the optical wireless communication system explained in the above-described embodiment is a mere sample for explaining the technical concept of this invention and accordingly can be modified appropriately.

As described above, according to this invention, the transmitter quickly searches an approximate position of the receiver with reference to the light-receiving level of the second optical signal, thereby reducing unnecessary operations of the transmitter as much as possible. Then, the transmitter executes the speedy and accurate automatic optical axis adjustment by finally adjusting its optical axis based on the light-receiving level information of the first optical signal which is carried on the second optical signal.

Furthermore, the transmitter grasps an approximate distance to the receiver based on the light-receiving level of the second optical signal, and accordingly can estimate an optimum light-receiving level of the first optical signal which is obtained from the second optical signal. Thus, it becomes possible to simplify the judgment in the optical axis adjustment and accordingly becomes possible to quickly accomplish the optical axis adjustment.

Furthermore, grasping the approximate distance to the receiver based on the light-receiving level of the second optical signal makes it possible for the transmitter to estimate a communicable area (i.e., the wideness of a spot) of the second optical signal at the receiver position. Thus, it becomes possible to appropriately limit the drive area in the optical axis adjustment. Accordingly, the drive control can be executed effectively so as to accomplish the optical axis adjustment speedily.

Moreover, according to the optical wireless communication system of this invention, the transmitter scans the light-emitting direction of the first optical transmitting device in the up-and-down direction as well as in the right-and-left direction to automatically adjust its optical axis toward the receiver. According to this invention, when the transmitter receives no second optical signal from the receiver, the transmitter stops emitting the first optical signal, thereby preventing the light from being emitted unnecessarily to the surrounding and accordingly preventing the peripheral devices from being adversely influenced.

**Claims**

1. An optical wireless communication system including a transmitter (1) having a first optical transmitting means (4) for transmitting a first optical signal having narrow directivity and a receiver (22) having a first optical receiving means (15, 16) for receiving said first optical signal and converting said first optical signal into an electric signal,

   **characterized in that**
   said receiver (22) comprising:

   light-receiving level detecting means (18) for detecting a light-receiving level of said first optical signal received by said first optical receiving means;
   second optical transmitting means (19, 20, 21) for transmitting a second optical signal which carries light-receiving level information of said first optical signal obtained by said light-receiving level detecting means and has directivity wider than that of said first optical signal;
   said transmitter (1) comprising:

   a second optical receiving means (5) including a plurality of light-receiving elements each having light-receiving capability for receiving said second optical signal at a level corresponding to the direction of said receiver (22);
   a drive means (13, 14) for positioning said first optical transmitting means (4) and said second optical receiving means (5) by integrally shifting said first optical transmitting means (4) and said second optical receiving means (5) toward the direction of said receiver;
   rough optical axis adjusting means (6, 7, 10, 11, 12) for executing a rough optical axis adjustment by controlling said drive means (13, 14) so as to eliminate a difference in the light-receiving level of said plurality of light-receiving elements of said second optical receiving means;

fine optical axis adjusting means (6, 7, 8, 9, 11, 12) for executing a fine optical axis adjustment by controlling said drive means (13, 14) based on the light-receiving level information contained in the second optical signal being received by said second optical receiving means (5), after the rough optical axis adjustment by said rough optical axis adjusting means is accomplished.

2. The optical wireless communication system in accordance with claim 1, wherein said plurality of light-receiving elements of said second optical receiving means (5) are four photoelectric conversion elements (PD1-PD4) arranged in a matrix pattern consisting of two lines and two rows in horizontal and vertical directions, and

said rough optical axis adjusting means executes the rough positioning of the optical axis in a total of eight directions based on the difference in the light-receiving level of said four photoelectric conversion elements.

3. The optical wireless communication system in accordance with claim 1 or claim 2, wherein said fine optical axis adjusting means searches a region wherein said light-receiving level information exceeds a predetermined value and executes the fine optical axis adjustment chiefly for the region identified by the search.

4. The optical wireless communication system in accordance with any one of claims 1 to 3, wherein said fine optical axis adjusting means searches a relatively wide region when said light-receiving level information is relatively small, and said fine optical axis adjusting means searches a relatively narrow region when said light-receiving level information is relatively large.

5. The optical wireless communication system in accordance with any one of claims 1 to 4, wherein said fine optical axis adjusting means estimates a distance to said receiver based on said light-receiving level information, and accomplishes said fine optical axis adjustment.

6. The optical wireless communication system in accordance with any one of claims 1 to 5, wherein transmitting said first optical signal by said first optical transmitting means is stopped until the light-receiving level of said plurality of light-receiving elements of said second optical receiving means exceeds a predetermined value.

FIG. 1

# *FIG. 2*

START

S1 — SUCCESSIVELY SELECT SECOND OPTICAL RECEIVE SIGNALS AND CHECK THEIR LIGHT-RECEIVING LEVELS

S2 — ANY RECEIVE SIGNAL EXCEEDING A PREDETERMINED LEVEL ?

NO →

S3 — STOP EMITTING FIRST OPTICAL SIGNAL

S4 — DRIVE SECOND OPTICAL RECEIVING SECTION WITH REFERENCE TO LIGHT-RECEIVING LEVELS OF RESPECTIVE SECOND OPTICAL RECEIVE SIGNALS

YES ↓

S5 — ALL OF LIGHT-RECEIVING LEVELS OF RESPECTIVE SECOND OPTICAL RECEIVE SIGNALS AGREE WITH EACH OTHER ?

NO →

S6 — DRIVE SECOND OPTICAL RECEIVING SECTION WITH REFERENCE TO LIGHT-RECEIVING LEVELS OF RESPECTIVE SECOND OPTICAL RECEIVE SIGNALS

YES ↓

S7 — START TRANSMITTING FIRST OPTICAL SIGNAL

S8 — CHECK LIGHT-RECEIVING LEVEL INFORMATION OF FIRST OPTICAL SIGNAL RECEIVED AT RECEIVER WHICH IS CARRIED ON SECOND OPTICAL SIGNAL

S9 — SEARCH OPTIMUM POSITION WHERE LIGHT-RECEIVING LEVEL OF FIRST OPTICAL SIGNAL IS MAXIMIZED WHILE FINELY CHANGING LIGHT-EMITTING DIRECTION OF FIRST OPTICAL TRANSMITTING DEVICE IN BOTH UP-AND-DOWN AND RIGHT-AND-LEFT DIRECTIONS

S10 — LIGHT-RECEIVING LEVEL OF FIRST OPTICAL SIGNAL IS MAXIMIZED ?

NO →

YES ↓

ACCOMPLISH OPTICAL AXIS ADJUSTMENT

# FIG. 3

POSITION A

22 LIGHT SOURCE

POSITION B 22

ABOVE

POSITION H 22

5

POSITION C 22    LEFT    PD1 PD2    RIGHT    22 POSITION G

PD3 PD4

22

BELOW

22

POSITION D    POSITION F 22

POSITION E 22

LIGHT-RECEIVING CIRCUIT 6

SL1 SL3 SL4 SL2

SELECT CONTROL SIGNAL    SIGNAL SELECT CIRCUIT 7

# FIG. 4

| LIGHT SOURCE POSITION (RECEIVER POSITION) | LARGENESS RELATIONSHIP AMONG LIGHT-RECEIVING SIGNAL LEVELS | DRIVE DIRECTION |
|---|---|---|
| POSITION A | $SL1 = SL2 < SL3 = SL4$ | ⬆ ABOVE |
| POSITION B | $SL1 < SL2 = SL3 < SL4$ | ⬉ OBLIQUE UPPER LEFT |
| POSITION C | $SL1 = SL3 < SL2 = SL4$ | ⬅ LEFT |
| POSITION D | $SL3 < SL1 = SL4 = SL2$ | ⬋ OBLIQUE LOWER LEFT |
| POSITION E | $SL3 = SL4 < SL1 = SL2$ | ⬇ BELOW |
| POSITION F | $SL4 < SL2 = SL3 = SL1$ | ⬊ OBLIQUE LOWER RIGHT |
| POSITION G | $SL2 = SL4 < SL1 = SL3$ | ➡ RIGHT |
| POSITION H | $SL2 < SL1 = SL4 < SL3$ | ⬈ OBLIQUE UPPER RIGHT |